# FASCICULE DE BREVET EUROPEEN

(11) **EP 4 113 344 B1**
(45) Date de publication et mention de la délivrance du brevet: **18.10.2023**
(21) Numéro de dépôt: 22182372.7
(22) Date de dépôt: 30.06.2022
(51) Int. Cl.: G06F 21/64, H04L 9/32, H04N 21/266, H04N 21/835, H04L 9/00, H04N 21/2743, H04N 21/4223

(54) **PROCÉDÉ ET SYSTÈME DE CERTIFICATION DE FAITS JURIDIQUES**
VERFAHREN UND SYSTEM ZUR BEGLAUBIGUNG VON RECHTLICHEN TATSACHEN
METHOD AND SYSTEM FOR CERTIFICATION OF LEGAL FACTS

(30) Priorité: 01.07.2021 FR 2107148
(43) Date de publication de la demande: 04.01.2023
(73) Titulaire: BP Ventures, 64200 Biarritz (FR)
(72) Inventeur: VERHOEK, Robbert Otto, 64100 Bayonne (FR); NOËL, Wilfried, 64600 Anglet (FR); LALANNE, Julien, 40100 Dax (FR); SANTRAILLE, Jean Dominique, 64000 Pau (FR)
(74) Mandataire: Rataboul, Xavier

(56) Documents cités:
- WO-A1-00/49797
- US-A1- 2006 115 111
- US-A1- 2014 049 653
- US-A1- 2019 325 164

## Description

L'invention se rapporte à un procédé et à un système de certification de faits juridiques au moyen de médias numériques. On entend par média numérique (ou « digital media » en anglais) tous les médias (photos, vidéos, prise de vue en trois dimensions, fichier audio, etc.) encodés dans des formats lisibles par machine, c'est-à-dire encodés sous la forme de nombres. Les médias numériques peuvent être créés, visualisés, distribués, modifiés et conservés sur un appareil électronique numérique ou transmis par Internet sous la forme de données représentées par une série de chiffres. Les termes médias digitaux peuvent également être employés comme synonyme.

On entend par fait juridique tout évènement ou toute situation de fait, volontaire ou non, qui a pour conséquence de produire des effets juridiques.

À titre d'exemple de faits juridiques, on peut citer les dommages liés à une inondation ou à une catastrophe naturelle, les dommages liés à une usure ou à un accident (par exemple fissures sur murets ou façades, état d'un dallage, barrières ou grillages endommagés), ou tout autre désordre (abandon ou retard de chantier, malfaçons, conséquence d'une fuite d'eau, une pollution ou un dépôt sauvage d'ordures, etc.). On peut également citer comme fait juridique les désordres avant chantier, pendant ou au moment de la réception de l'ouvrage, la signature d'un contrat, la livraison de biens ou produits, l'affichage d'un arrêté municipal ou d'un avis de permis de construire.

La présente invention vise à proposer un procédé et un système permettant de constituer une preuve ayant une force probante élevée d'un fait juridique.

En effet, la preuve d'un fait juridique peut, dans de nombreuses législations, être apportée par tout moyen. Or, la force probante varie selon les moyens employés.

II peut s'agir, par exemple, d'une simple photo prise par un utilisateur quelconque via son téléphone, sa tablette ou un appareil photographique. Cette preuve n'a qu'une faible valeur probante, similaire à un renseignement, car la photo peut avoir été retouchée et/ou l'utilisateur peut avoir tronqué la scène.

À l'inverse, il existe dans de nombreux pays des systèmes de constitution de preuve ayant une force probante très forte.

En France, on connaît par exemple le Procès-Verbal de constat dressé par un Huissier de Justice. Pour obtenir un tel constat, l'Huissier doit se déplacer sur place pour observer en personne le fait juridique. Il note alors dans un Procès-Verbal, ce qu'il constate matériellement. Ces constatations font foi jusqu'à preuve contraire.

Cependant, un tel constat peut prendre du temps à organiser, nécessite un déplacement de l'Huissier sur place et engage des coûts qui peuvent être trop importants par rapport aux enjeux du fait juridique.

Il existe déjà des applications informatiques visant à certifier des médias numériques.

Avec ce type d'application, un utilisateur transmet à un Huissier de justice des photos d'un fait juridique pour horodatage. Après avoir reçu les photos, l'Huissier émet un Procès-Verbal automatique ou quasi automatique en quelques minutes sur lequel il appose une simple copie de sa signature manuscrite.

Un tel Procès-Verbal n'a qu'une très faible force probante, car l'origine et la sincérité des photos ne sont pas garanties, puisqu'elles peuvent avoir été retouchées ou manipulées au préalable. En outre, l'Huissier de justice ou le tiers de confiance qui certifie les photos est toujours le même ce qui peut donc, selon les législations, affaiblir la force probante du Procès-Verbal. Enfin, l'identité de la personne qui enregistre les photos n'est pas certaine puisqu'une simple copie de la signature est apposée sur le Procès-Verbal, copie qui peut être facilement acquise sur des Procès-Verbaux déjà signés et en ligne. Il n'est donc pas possible de prouver que c'est bien un Huissier ou un tiers de confiance qui a établi le Procès-Verbal. On connaît également des systèmes de certification d'images numériques qui consistent à apposer sur l'image un tampon de vérification. On peut citer à cet égard les documents US2019/325164, US2014/049653 et US2006115111. Cependant, l'image initiale pourrait être contrefaite avant l'apposition du tampon, sans que le système ne permette d'identifier la fraude.

Un objectif de la présente invention est donc de proposer un procédé et un système de certification de faits juridiques ayant une force probante forte, de sorte qu'elle soit difficile à contester et que l'apport de la preuve contraire soit difficile à apporter, tout en étant économique, écologique, facile et rapide à mettre en oeuvre.

L'idée qui sous-tend l'invention est de proposer un procédé et un dispositif qui créent un lien entre un tiers de confiance et le fait juridique, sans que le tiers n'ait à se déplacer in situ, ni que l'utilisateur ne puisse intervenir ou interférer au cours de ce lien. En d'autres termes, l'idée de l'invention est de simuler la présence du tiers sur place par la constitution d'un lien entre lui et le fait juridique, et d'assurer que ce lien ne puisse être corrompu pour que la force probante de la certification soit optimale et que la contestation de la matérialité du fait juridique soit difficile, voire impossible.

En d'autres termes, l'invention propose un procédé et un système permettant à un utilisateur quelconque de capturer et d'envoyer de manière sécurisée des médias numériques représentatifs d'un fait juridique, sans possibilité d'y accéder ni de les modifier, à un tiers de confiance, tel qu'un Huissier de Justice, un expert d'un métier, une personne avec une compétence de juger la conformité, un solution par l'intelligence artificielle permettant de vérifier la conformité, pour que ce dernier puisse en attester la réception, l'absence de modification, l'horodatage et la géolocalisation.

Dans la présente invention, le média numérique (ou « digital media » en anglais) peut être une ou des photos (qui sont des prises de vues numériques individuelles), ou des vidéos (qui sont des suites de prises de vues), prises par un appareil de capture muni d'une caméra numérique, tel qu'un smartphone, une tablette numérique, un ordinateur portable, une montre électronique, etc.

Un média numérique dans le cadre de l'invention peut également être une prise de vue en trois dimensions, par exemple constituée par un ensemble de données de distance entre l'appareil et la cible (le fait juridique) obtenue par un capteur de distance, de préférence un scanner LIDAR (pour « light détection and ranging » ou « laser détection and ranging » en anglais, soit en français « détection et estimation de la distance par la lumière » ou « par laser »).

Plus précisément, l'invention a pour objet un procédé de certification par un tiers de confiance de médias numériques représentatifs d'un fait juridique, capturés par un utilisateur au moyen d'un appareil de capture de médias numériques, tels que des photos ou des vidéos, l'appareil étant muni d'une caméra numérique, d'une bibliothèque native de stockage de médias numériques, d'une interface homme/machine, et d'un émetteur/récepteur apte à transmettre les médias numériques à au moins un serveur distant via un réseau de télécommunication. Le procédé se caractérise en ce qu'il comprend les étapes suivantes :
a) créer une mémoire dédiée dans l'appareil, différente de la bibliothèque native et inaccessible à l'utilisateur, pour traiter et/ou stocker des médias numériques à certifier, et interdire l'enregistrement des médias numériques dans la bibliothèque native de l'appareil de capture ;
b) afficher sur l'interface une commande d'activation pour débuter une action de certification ;
c) lorsque la commande d'activation a été sélectionnée par l'utilisateur, requérir la prise d'au moins une, de préférence au moins deux, avantageusement au moins trois prises de vues du fait juridique par l'utilisateur, pour créer au moins un média numérique à certifier ;
d) générer un fichier à certifier comprenant ledit au moins un média numérique à certifier, un horaire de prise de vue dudit au moins un média numérique à certifier et des coordonnées géographiques de l'appareil à l'horaire de prise de vue ;
e) si une connexion au réseau de télécommunication ne peut être établie, stocker temporairement pendant une durée prédéterminée le fichier à certifier dans la mémoire dédiée inaccessible à l'utilisateur, et, si une connexion au réseau de télécommunication peut être établie, transmettre le fichier à certifier au serveur de stockage distant via le réseau de télécommunication ;
g) transmettre le fichier à certifier comprenant ledit au moins un média numérique à certifier à un tiers de confiance pour certification ;
h) émettre et enregistrer sur le serveur distant un procès-verbal de certification si ledit au moins un média numérique est certifié, ou émettre et transmettre à l'utilisateur un avertissement de non-certification si ledit au moins un média numérique n'est pas certifié.

Grâce à la mémoire dédiée et à l'interdiction de l'enregistrement des prises de vue dans la bibliothèque native, on crée un lien direct entre l'objectif de la caméra de l'appareil de capture et le serveur distant auquel accède le tiers de confiance, sans que l'utilisateur ne puisse interférer. En outre, l'horodatage et les coordonnées de géolocalisation insérés automatiquement assurent le traçage et le suivi des prises de vue et certifient le lieu des prises de vue. Enfin, en obligeant des prises de vue selon des valeurs d'agrandissement différentes, on assure une contextualisation du fait juridique et on peut s'assurer, en comparant les prises de vue, qu'il n'y a pas eu de modifications desdites prises de vue, ce qui renforce encore l'intégrité du procédé.

Selon des formes de réalisation particulières :
- l'étape d) peut comprendre, en outre, l'apposition d'un marquage unique sur le dit au moins un média numérique à certifier pour créer au moins un média numérique marqué ;
- le marquage peut être un marquage par stéganographie ;
- le procédé de certification peut comprendre en outre, entre l'étape e) et l'étape g), une étape f) de vérification de conformité du marquage unique sur le dit au moins un média numérique à certifier ;
- l'étape g) peut comprendre une étape g1) de transmission à un tiers de confiance d'un message d'avertissement qu'un fichier à certifier comprenant ledit au moins un média numérique à certifier est présent sur le serveur, une étape g2) d'affichage sur une interface du tiers de confiance du média numérique à certifier lorsque le tiers de confiance se connecte au serveur, et une étape g3) d'enregistrement sur le serveur d'un procès-verbal de certification si le tiers de confiance certifie ledit au moins un média numérique à certifier, ou de transmission à l'utilisateur d'un avertissement de non-certification si le tiers de confiance ne certifie pas ledit au moins un média numérique à certifier ;
- l'étape d) peut comprendre , en outre, le cryptage du fichier à certifier et/ou des médias numériques à certifier avec une clé de cryptage, et l'étape g) comprend la transmission au tiers de confiance d'une clé de décryptage ;
- l'étape g) peut comprendre une étape g'1) de transmission à un tiers de confiance d'une clé de décryptage et d'un message d'avertissement qu'un fichier à certifier crypté comprenant ledit au moins un média numérique à certifier est présent sur le serveur, une étape g'2) de décryptage et d'affichage du fichier à certifier décrypté sur une interface du tiers de confiance, lorsque le tiers de confiance se connecte au serveur, et une étape g'3) d'enregistrement sur le serveur d'un procès-verbal de certification si le tiers de confiance certifie ledit au moins un média numérique à certifier, ou de transmission à l'utilisateur d'un avertissement de non-certification si le tiers de confiance ne certifie pas ledit au moins un média numérique à certifier ;
- l'étape g) peut comprendre une étape g"1) de transmission du fichier à certifier crypté comprenant ledit au moins un média numérique à certifier, sans clé de décryptage à un premier tiers de confiance conservateur, une étape g"2) de transmission de la clé de décryptage du fichier à certifier crypté, sans ledit fichier, à un deuxième tiers de confiance conservateur, une étape g"3) de collecte, par un tiers de confiance certificateur, du fichier à certifier crypté et de la clé de décryptage respectivement auprès du premier et du deuxième tiers de confiance conservateur, une étape g"4) de décryptage et d'affichage du fichier à certifier décrypté sur une interface du tiers de confiance certificateur lorsque le tiers de confiance se connecte au serveur, et une étape g"5) d'enregistrement sur le serveur d'un procès-verbal de certification si le tiers de confiance certificateur certifie ledit au moins un média numérique à certifier, ou de transmission à l'utilisateur d'un avertissement de non-certification si le tiers de confiance certificateur ne certifie pas ledit au moins un média numérique à certifier ;
- le média numérique à certifié peut être du type photo, l'étape c) comprenant la prise d'au moins deux, avantageusement au moins trois prises de vue du fait juridique par l'utilisateur, depuis un même angle de vue et selon des valeurs d'agrandissement différentes pour créer au moins deux, de préférence au moins trois photos numériques à certifier ;
- le média numérique à certifié peut être du type vidéo, l'étape c) comprenant la prise d'une multitude de prises de vue du fait juridique par l'utilisateur selon des valeurs d'agrandissement différentes et éventuellement des angles de vue différents, pour créer au moins une vidéo numérique à certifier ;
- les coordonnées géographiques de l'appareil enregistrées à l'étape d) peuvent être mesurées à l'horaire de chaque prise de vue, puis traitées de manière à obtenir une position géographique moyenne entre une première prise de vue et une dernière prise de vue, cette position géographique moyenne étant enregistrée dans le fichier à certifier ;
- l'étape g) peut comprendre une sous-étape préliminaire g0) de sélection du tiers de confiance parmi une liste de tiers de confiance préenregistrés, la sélection résultant d'une règle de sélection ;
- la règle de sélection peut comprendre la comparaison des coordonnées géographiques comprises dans le fichier à certifier avec des coordonnées géographiques représentatives de chaque tiers de confiance préenregistré, et la sélection d'un tiers de confiance le plus proche géographiquement des coordonnées géographiques comprises dans le fichier à certifier ;
- lorsque le fait juridique est localisé à l'intérieur d'une zone déterminée, l'étape c) peut comprendre une requête d'au moins une prise de vue à l'extérieure de la zone déterminée du fait juridique ;
- l'étape c) peut comprendre une mesure automatique de distance entre l'appareil de capture de médias numériques et le fait juridique, et la production d'un signal d'avertissement lorsque l'appareil est situé à une distance prédéterminée du fait juridique pour permettre la prise d'au moins deux, de préférence au moins trois, prises de vues du fait juridique par l'utilisateur, selon des valeurs d'agrandissement différentes ;
- l'étape c) peut comprendre une requête d'une première prise de vue à une première valeur d'agrandissement, puis une requête d'une deuxième prise de vue à une deuxième valeur d'agrandissement, différente de la première, puis, de préférence, une requête d'une troisième prise de vue à une troisième valeur d'agrandissement, différente de la première et de la deuxième, pour permettre la prise d'au moins deux, de préférence au moins trois, prises de vues du fait juridique par l'utilisateur, selon des valeurs d'agrandissement différentes ;
- l'étape c) peut comprendre une sous-étape préliminaire c0) de renseignement par l'utilisateur d'une taille approximative du fait juridique, les premières, deuxièmes et éventuellement troisièmes valeurs d'agrandissement étant calculées en fonction de la taille approximative du fait juridique ;
- l'étape b) peut comprendre une sous-étape préliminaire b0) de renseignement d'une durée de l'action de certification ;
- l'étape c) peut comprendre une requête d'annotation par l'utilisateur concernant chaque média numérique à certifier ;
- l'étape c) peut comprendre la capture de données de distances entre l'appareil de capture et le fait juridique, et l'étape g) comprend l'envoi à une imprimante 3D des données de distance et une commande pour fabriquer une reconstitution tridimensionnelle du fait juridique ;
- l'étape e) peut comprendre l'enregistrement d'un horaire de réception du fichier à certifier par le serveur de stockage, et l'étape g) comprend l'enregistrement d'un horaire de connexion du tiers de confiance au serveur de stockage, le procédé de certification comprenant, en outre, une étape i) de calcul de délai entre l'horaire de réception du fichier à certifier par le serveur de stockage et l'horaire de connexion du tiers de confiance au serveur de stockage, de comparaison entre le délai calculé et un délai de réaffectation prédéterminé, et de réaffectation du fichier à certifier à un autre tiers de confiance ; et/ou
- l'étape e) peut comprendre l'enregistrement d'un horaire de réception du fichier à certifier par le serveur de stockage, le procédé de certification comprenant, en outre, une étape j) de calcul de temps écoulé depuis l'horaire de réception du fichier à certifier par le serveur de stockage, de comparaison entre le temps écoulé depuis l'horaire de réception du fichier à certifier par le serveur de stockage et un délai de rappel prédéterminé, et l'émission d'un rappel au tiers de confiance lorsque l'horaire de réception du fichier à certifier par le serveur de stockage est supérieur au délai de rappel prédéterminé.

L'invention a également pour objet un système de certification par un tiers de confiance de médias numériques représentatifs d'un fait juridique, comprenant au moins un serveur distant programmé pour communiquer via un réseau de télécommunication avec au moins un appareil de capture de médias numériques d'un utilisateur, l'appareil de capture étant muni d'une caméra numérique, d'une bibliothèque native de stockage des médias numériques capturés accessible par l'utilisateur, d'une interface homme-machine, et d'un émetteur/récepteur apte à transmettre les médias numériques audit serveur distant, caractérisé en ce que :
- l'appareil de capture comprend une mémoire dédiée distincte de la bibliothèque native, inaccessible à l'utilisateur, pour traiter et/ou stocker des médias numériques à certifier ; et en ce que
- l'appareil de capture et le serveur sont programmés pour mettre en oeuvre le procédé précédent.

Selon des formes de réalisation particulières :
- le système de certification dans lequel :
   - l'appareil de capture peut être programmé pour :
      - réserver un espace de mémoire dédiée inaccessible à l'utilisateur et interdire l'enregistrement des médias numériques dans la bibliothèque native de l'appareil de capture :
      - afficher sur l'interface une commande d'activation pour débuter une action de certification ;
      - lorsque la commande d'activation a été sélectionnée par l'utilisateur, requérir la prise d'au moins deux, de préférence au moins trois vues du fait juridique par l'utilisateur, selon des valeurs d'agrandissement différentes pour créer au moins un média numérique à certifier ;
      - générer un fichier à certifier comprenant ledit au moins un média numérique à certifier, un horaire de prise de vue dudit au moins un média numérique à certifier et des coordonnées géographiques de l'appareil à l'horaire de prise de vue ;
      - stocker temporairement le fichier à certifier si une connexion au réseau de télécommunication ne peut être établie, sans que l'utilisateur ne puisse les modifier ou les supprimer après prise de vue ;
      - transmettre au serveur distant le fichier à certifier si une connexion au réseau de télécommunication peut être établie, sans que l'utilisateur ne puisse les modifier ou les supprimer après prise de vue ; et
   - le serveur peut être programmé pour .
      - transmettre le fichier à certifier comprenant ledit au moins un média numérique à certifier à un tiers de confiance pour certification ;
      - émettre et enregistrer un procès-verbal de certification (114) si le média numérique est certifié, ou émettre et transmettre à l'utilisateur un avertissement de non-certification si le média numérique n'est pas certifié ;
- l'appareil de capture peut être également programmé pour apposer un marquage unique sur le dit au moins un média numérique à certifier pour créer au moins un média numérique marqué ;
- l'appareil de capture peut comprendre, en outre, un capteur de distance, l'appareil étant programmé pour mesurer automatiquement une distance entre l'appareil de capture de médias numériques et le fait juridique, et pour produire un signal d'avertissement lorsque l'appareil est situé à une distance prédéterminée du fait juridique pour permettre la prise d'au moins deux, de préférence au moins trois, prises de vues du fait juridique par l'utilisateur, selon des valeurs d'agrandissement différentes ;
- le capteur de distance peut être associé à un système de balayage angulaire programmé pour effectuer un balayage d'une zone définie comprenant le fait juridique et obtenir une ou plusieurs prises de vues constituées par des données de distance, l'appareil de capture étant programmé pour réaliser une cartographie en trois dimensions la surface de ladite zone à partir des données de distances obtenues, et pour générer un fichier à certifier comprenant ladite cartographie en tant que média numérique à certifier, un horaire d'obtention de la cartographie, et des coordonnées géographiques de l'appareil à l'horaire de la cartographie ;
- le serveur distant peut être également programmé pour transmettre à l'appareil de capture une clé de marquage des médias numériques à certifier ;
- le serveur distant peut être également programmé pour vérifier la conformité du marquage sur chaque média numérique à certifier reçu de l'appareil de capture ;
- le serveur distant peut être également programmé pour transmettre à l'appareil de capture une clé de cryptage du fichier à certifier et/ou des médias numériques à certifier et pour transmettre à un tiers de confiance une clé de décryptage ;
- le serveur distant peut être également programmé pour choisir un tiers de confiance en fonction des coordonnées géographiques comprises dans le fichier à certifier ; et/ou
- le serveur distant peut être également programmé pour transmettre le fichier à certifier crypté, sans clé de décryptage à un premier tiers de confiance conservateur, pour transmettre la clé de décryptage du fichier à certifier crypté, sans ledit fichier, à un deuxième tiers de confiance conservateur, et pour collecter, sur requête d'un tiers de confiance certificateur, le fichier à certifier crypté et la clé de décryptage respectivement auprès du premier et du deuxième tiers de confiance conservateur.

D'autres caractéristiques de l'invention seront énoncées dans la description détaillée ci-après faite en référence aux figures annexées, données à titre d'exemple, et qui représentent, respectivement :
[Fig. 1], une vue schématique d'un système de certification selon l'invention ; et
[Fig. 2], un diagramme fonctionnel du procédé de certification selon l'invention.

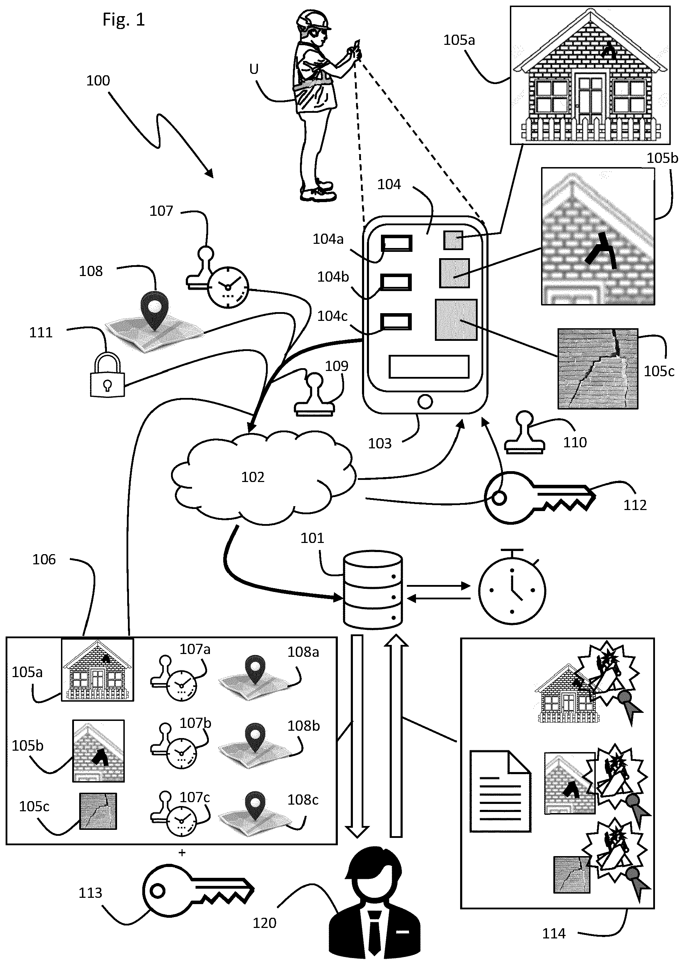

La figure 1 illustre un système de certification 100 pour la mise en oeuvre du procédé de certification selon l'invention.

Le système 100 comprend au moins un serveur distant 101 programmé pour communiquer via un réseau de télécommunication 102 avec au moins un appareil 103 de capture de médias numériques d'un utilisateur U.

L'appareil de capture 103 est muni d'une caméra numérique (non illustrée) qui permet la capture de prises de vue soit sous forme de photos (prises de vues individuelles) soit sous forme de vidéo (suite de prises de vues).

Dans un mode de réalisation avantageux décrit ultérieurement, l'appareil de capture 103 peut être muni d'un capteur de distance permettant la capture de prises de vue en trois dimensions comprenant des données de distance entre l'appareil et la cible, c'est-à-dire, dans l'utilisation concernée par la présente invention, d'un fait juridique.

L'appareil de capture 103 est avantageusement un smartphone, une tablette ou un ordinateur portable du commerce, sur lequel a été installée une application informatique permettant la mise en oeuvre du procédé selon l'invention.

Ce type d'appareil 103 comprend une interface homme-machine 104 (généralement un écran tactile ou un ensemble écran/clavier/pavé tactile ou souris) et un émetteur-récepteur apte à communiquer avec un réseau de communication téléphonique et/ou Internet (généralement un émetteur/récepteur wifi, LoRa, GSM, 3G, 4G, 5G, etc.). Selon l'invention, l'application informatique de mise en oeuvre du procédé permet la transmission de médias numériques au serveur distant 101 via le réseau de communication 102.

Le système d'exploitation de ce type d'appareil prévoit nativement, c'est-à-dire par défaut et sans que l'utilisateur n'ait à l'installer, une bibliothèque native de stockage des médias numériques capturés par la caméra et accessible par l'utilisateur. Il peut ainsi consulter les photos qu'il a prises, les partager, les modifier et/ou donner l'accès de cette bibliothèque à d'autres applications pour la retouche d'image par exemple.

En d'autres termes, l'appareil est nativement programmé pour enregistrer toutes les prises de vues capturées par la caméra dans cette bibliothèque accessible à l'utilisateur.

Selon l'invention, l'appareil de capture 103 est programmé pour réserver un espace de mémoire dédiée, différent de la bibliothèque native et inaccessible à l'utilisateur, et pour interdire l'enregistrement des médias numériques dans la bibliothèque native de l'appareil de capture.

On entend par « inaccessible à l'utilisateur », un espace de mémoire que l'utilisateur ne peut consulter, soit parce qu'il n'y a pas accès, soit parce qu'il ne dispose pas des droits d'accès, soit parce qu'il ne dispose pas des codes d'accès, soit parce qu'il ne peut identifier la mémoire à la partie de mémoire concernée. Dans un mode de réalisation préféré, l'espace mémoire inaccessible à l'utilisateur est un espace de stockage crypté dont l'utilisateur ne possède pas la clé de cryptage de sorte qu'il ne peut ni consulter ni modifier les données présentes dans cet espace mémoire.

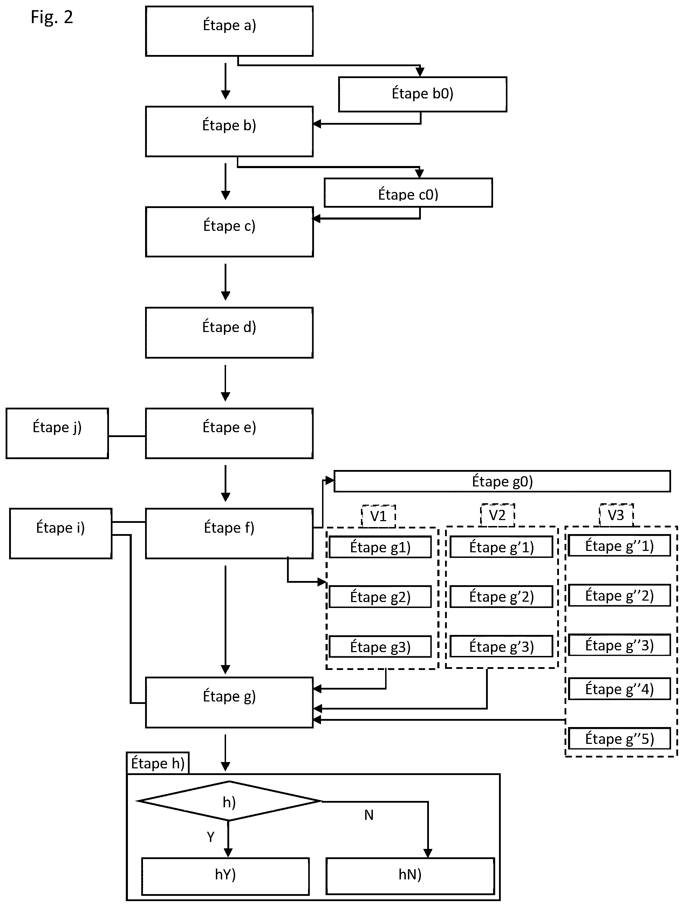

Cet espace de mémoire dédié comprend au moins un premier espace localisé dans une mémoire vive de l'appareil (c'est-à-dire volatile) utilisé pour effectuer des traitements du média numérique (marquage et/ou cryptage), horodatage, géolocalisation, etc. ; (voir description de l'étape d) de la figure 2), et qui est effacée après le traitement du média numérique. Ce premier espace est inaccessible à l'utilisateur qui ne peut pas connaître son adresse dans la mémoire vive.

L'espace de mémoire dédié comprend avantageusement un deuxième espace localisé dans une mémoire morte de stockage (c'est-à-dire non volatile), différent bien entendu de la bibliothèque native. Ce deuxième espace comprend un fichier crypté dont seule l'application possède les droits d'accès. Ce deuxième espace est utilisé pour stocker temporairement les médias numériques traités dans le premier espace de mémoire vive et qui n'ont pu être transmis à un serveur distant, par exemple parce que l'appareil est en mode « hors ligne ».

En d'autres termes, cet espace de mémoire dédié est essentiellement utilisé par l'application pour traiter les prises de vues (premier espace en mémoire vive), mais il peut également être utilisé pour stocker temporairement les prises de vues traitées au cas où une connexion au réseau de télécommunication ne peut être établie (deuxième espace en mémoire morte). Ce qui importe, c'est que même en cas de stockage temporaire, l'utilisateur ne puisse y avoir accès.

Dans un mode de réalisation particulier, le deuxième espace en mémoire morte, ou un troisième espace en mémoire morte différent du deuxième, est/sont utilisé(s) par l'application pour stocker des outils de traitement (clé de marquage, clé de cryptage).

L'appareil de capture 103 est également programmé pour afficher sur l'interface une commande d'activation pour débuter une action de certification.

Cette commande comprend avantageusement une requête de renseignement d'identifiants de l'utilisateur pour associer l'utilisateur à son espace personnel sur le serveur distant. Cet espace personnel pourra être consulté à distance par l'utilisateur et comprend les Procès-Verbaux des médias numériques déjà certifiés par un tiers de confiance.

Lorsque la commande d'activation a été sélectionnée par l'utilisateur, l'appareil de capture 103 est programmé pour requérir la prise d'au moins une, de préférence au moins deux, avantageusement au moins trois vues du fait juridique par l'utilisateur, selon des valeurs d'agrandissement différentes.

Un exemple de réalisation est illustré en figure 1 sur laquelle l'écran 104 du smartphone 103 affiche trois icônes 104a, 104b, 104c représentant trois valeurs d'agrandissement différentes.

En appuyant sur l'icône 104a, l'utilisateur actionne la caméra et prend une photo en plan large 105a, par exemple. Sur la figure 1, cette photo 105a représente une maison M vue dans son intégralité et dont la façade présente une fissure F.

En appuyant sur l'icône 104b, l'utilisateur actionne la caméra et prend une photo en plan moyen 105b, par exemple. Sur la figure 1, cette photo 105b représente une portion de la façade de la maison M présentant une fissure F.

Enfin, en appuyant sur l'icône 104c, l'utilisateur actionne la caméra et prend une photo en plan serré 105c, par exemple. Sur la figure 1, cette photo 105c représente la fissure F et permet d'en distinguer les détails.

L'appareil de capture permet ainsi de créer au moins un média numérique à certifier et, dans le cas de l'exemple décrit, trois médias numériques (trois photos 105a, 105b, 105c) à certifier.

Dans une variante particulière, l'ordre des prises de vue en fonction de la valeur d'agrandissement peut être imposé par le système à l'utilisateur.

De préférence, l'appareil de capture est programmé pour afficher un champ de commentaire en regard de chaque média numérique à certifier, de sorte que l'utilisateur puisse annoter les médias. Ce mode de réalisation est, de préférence, réservé au mode en ligne. Ainsi, avantageusement, en mode hors ligne, l'appareil de capture est programmé pour ne pas afficher de champ de commentaire pour éviter tout risque de modification des commentaires avant l'envoi des prises de vues lors du retour en ligne de l'appareil.

De préférence, l'appareil de capture est programmé pour guider l'utilisateur dans la capture des prises de vues à différentes valeurs d'agrandissement.

Par exemple, l'application affiche une requête d'une première prise de vue à une première valeur d'agrandissement, puis, une fois la première vue capturée, une requête d'une deuxième prise de vue à une deuxième valeur d'agrandissement, différente de la première. Puis, de préférence, une fois la deuxième vue capturée, l'application affiche une requête d'une troisième prise de vue à une troisième valeur d'agrandissement, différente de la première et de la deuxième, et ainsi de suite, pour permettre la capture d'au moins deux, de préférence au moins trois, prises de vues du fait juridique par l'utilisateur, selon des valeurs d'agrandissement différentes.

Les valeurs d'agrandissement différentes peuvent être obtenues de deux manières différentes : soit l'utilisateur conserve la même valeur de zoom de l'appareil capture et il se rapproche du fait juridique pour capturer les différentes prises de vue, soit l'utilisateur reste à la même distance du fait juridique et il change la valeur du zoom.

Lorsque le média numérique à certifier est du type photo, l'appareil de capture est programmé, de préférence, pour requérir la capture des prises de vues de différentes valeurs d'agrandissement en conservant le même angle de vue, ce qui permet de limiter les risques de manipulation de l'image et permettra, in fine, au tiers de confiance, de certifier que les photos sont bien liées les unes aux autres par un fait juridique commun.

Cette précaution de conserver le même angle de vue n'est pas nécessaire lorsqu'il s'agit d'une vidéo puisque le tiers de confiance pourra identifier de visu le parcours de l'utilisateur lors de la capture de la vidéo. Ainsi, lorsque le média numérique à certifier est du type vidéo, la prise de la vidéo (qui est constituée par une suite d'une multitude de prises de vue) peut se faire selon des valeurs d'agrandissement différentes et des angles de vue différents, pour créer la vidéo numérique à certifier.

Dans une variante préférée, le guidage de l'utilisateur en matière de différence de valeurs d'agrandissement différentes est plus important et permet de s'assurer de la qualité des prises de vue, en particulier lorsqu'il s'agit de photos.

À cette fin, l'appareil de capture comprend, en outre, un capteur de distance qui peut être déjà intégré à l'appareil ou rapporté par l'adjonction d'un objectif amovible doté d'un capteur de distance intégré. Un tel capteur permet de respecter les distances entre les prises de vue en fonction de la taille du fait juridique à identifier. De préférence, dans ce cas, l'appareil de capture est programmé pour stocker, pour chaque prise de vue, l'information de distance entre l'appareil de capture et le fait juridique, afin de permettre une analyse ultérieure de l'agrandissement et de la distance par le tiers de confiance, et juger de la cohérence entre les différentes prises de vue.

Par exemple, il peut s'agir d'un télémètre à ultra-sons, un télémètre à infrarouge, un télémètre laser ou un scanner LIDAR.

De préférence, l'appareil de capture 103 est programmé pour afficher sur l'interface une requête de renseignement, par l'utilisateur, d'une taille approximative du fait juridique, ce qui permet à l'appareil de capture de calculer les premières, deuxièmes et éventuellement troisièmes (voire plus) valeurs d'agrandissement en fonction de la taille approximative du fait juridique.

Par exemple, l'appareil de capture peut être programmé pour requérir la capture des prises de vues respectivement à :
- 10 mètres (plan large), 5 mètres (plan moyen) et 1 mètre (plan serré) pour une cible (le fait juridique) d'une longueur de moins de cinquante centimètres ;
- 20 mètres (plan large), 10 mètres (plan moyen) et 3 mètres (plan serré) pour une cible (le fait juridique) d'une longueur comprise entre cinquante centimètres et deux mètres ;
- 30 mètres (plan large), 15 mètres (plan moyen) et 5 mètres (plan serré) pour une cible (le fait juridique) d'une longueur de plus de deux mètres.

Ces valeurs sont données à titre d'exemple non limitatif et peuvent faire l'objet de réglage par l'utilisateur ou le gestionnaire du système selon l'invention en fonction du type de fait juridique à capturer.

Ainsi, selon cette variante de l'invention, l'appareil de capture 103 est programmé pour mesurer automatiquement une distance entre l'appareil de capture de médias numériques et sa cible (le fait juridique), et pour produire un signal d'avertissement lorsque l'appareil est situé à une distance déterminée du fait juridique calculée par l'appareil. Ce faisant, l'appareil permet la prise d'au moins deux, de préférence au moins trois, prises de vues du fait juridique par l'utilisateur, selon des valeurs d'agrandissement différentes, ce qui assure le tiers de confiance de pouvoir faire le lien entre les prises de vue et de contextualiser le fait juridique et lui permet de certifier l'authenticité des prises de vues.

Le signal d'avertissement peut être sonore ou visuel sur l'appareil de capture.

Selon le mode de capture choisit, soit l'utilisateur conserve la même valeur de zoom de la caméra et il se rapproche de la cible, auquel cas le calcul de distance entre l'appareil et la cible lui est utile pour savoir quand il doit s'arrêter pour capturer la prise de vue suivante, soit il reste à la même distance de la cible, et l'utilisateur change la valeur du zoom. Dans ce cas, l'appareil lui indique des valeurs de zoom idoines pour les différentes prises de vue, de préférence en fonction de la taille approximative du fait juridique qui a été renseignée au préalable.

Le capteur de distance peut avantageusement être utilisé pour réaliser lui-même des prises de vue en trois dimensions et non simplement indiquer les valeurs d'agrandissement à l'utilisateur.

À cette fin, le capteur de distance est associé à un système de balayage angulaire programmé pour effectuer un balayage d'une zone définie comprenant le fait juridique et obtenir une ou plusieurs prises de vues constituées par des données de distance. Un tel capteur est avantageusement un scanner LIDAR.

Ainsi équipé, l'appareil de capture est programmé pour réaliser une cartographie en trois dimensions de la surface de ladite zone à partir des données de distances obtenues, ladite cartographie étant le média numérique à certifier.

Une fois les prises de vues capturées, l'appareil de capture 103 selon l'invention est également programmé pour générer un fichier à certifier 106 comprenant ledit au moins un média numérique à certifier (sur la figure 1 : les trois photos, mais cela peut être une vidéo ou une cartographie en trois dimensions), un horodatage 107 de prise de vue dudit ou de chaque média numérique à certifier et les coordonnées géographiques 108 de l'appareil à l'horodatage de prise de vue.

À cette fin, l'application est programmée pour accéder à l'horloge interne de l'appareil numérique et pour enregistrer l'horodatage (l'heure et la date) de chaque prise de vue. En outre, elle accède au capteur GPS (ou autre) de l'appareil et enregistre les coordonnées de géolocalisation de l'appareil à l'horodatage de prise de vue. Alternativement ou en combinaison, l'application selon l'invention est programmée pour récupérer les données de géolocalisation de l'appareil à partir d'une application dédiée présente dans l'appareil, par exemple destinée à améliorer la précision des données de géolocalisation du capteur GPS (ou autre).

Ainsi, le fichier à certifier 106 comprend les prises de vues, mais également les données d'horodatage (date et heure) et de coordonnées géographiques relatives à chaque prise de vue (ou à l'ensemble de prise de vue lorsqu'il s'agit d'une vidéo ; il est possible, dans ce cas, de n'enregistrer que l'heure de début et l'heure de fin ou la durée de la vidéo).

D'autres informations peuvent également être captées et enregistrées comme, par exemple, l'altimétrie, la température, etc.

Dans un mode de réalisation avantageux, les coordonnées géographiques (coordonnées GPS) de l'appareil stockées dans le fichier à certifier 106, sont le résultat d'un calcul (par exemple une moyenne) effectué sur les coordonnées géographiques mesurées à l'horaire de chaque prise de vue.

Un tel calcul permet d'utiliser la fonction de rafraîchissement du capteur de données de géolocalisation (GPS, Galiléo, etc) et d'enclencher une nouvelle évaluation de la précision des données de géolocalisation permettant à l'application de retenir ou pas les données de géolocalisation de chaque photo selon des critères de niveau de précision prédéfinis dans l'application. Ce rafraîchissement se faisant au fur et à mesure des prises de vues, afin de conserver les coordonnées de géolocalisation les plus fiables.

En tout état de cause, ces coordonnées géographiques sont récupérées automatiquement et attribuées au média à certifier sans que l'utilisateur ne puisse les modifier.

De préférence, le procédé de certification ne peut débuter que si le capteur de données de de géolocalisation (GPS ou autre) de l'appareil de capture est actif.

Dans un mode de réalisation particulier, lorsque le fait juridique à démontrer se trouve à l'intérieur d'une zone déterminée, par exemple à l'intérieur d'un bâtiment, l'appareil de capture est programmé pour requérir au moins une prise de vue à l'extérieure de la zone déterminée du fait juridique. Cette option permet de contextualiser les prises de vue.

Dans un mode de réalisation préféré de l'invention, l'appareil de capture est également programmé pour apposer un marquage 109 unique sur le ou les médias numériques à certifier pour créer au moins un média numérique marqué.

Avantageusement, il s'agit d'un marquage par stéganographie modifié par une fréquence définie par le système.

S'il s'agit de photos, chaque photo pourra être marquée.

À fin de marquage, le serveur distant 101 est programmé pour transmettre à l'appareil de capture une clé de marquage 110 des médias numériques à certifier, par exemple au moment de l'installation de l'application informatique sur l'appareil de capture ou après la connexion de l'utilisateur, c'est-à-dire après son identification par le système. Alternativement, ce marquage est créé par le serveur et envoyé à l'application. Le premier marquage est celui du marquage du jour de l'installation de l'application. Puis chaque jour le serveur envoie un nouveau marquage. Si l'appareil est hors ligne, il sera attribué le marquage du jour de la dernière mise à jour. L'important, est de pouvoir sécuriser le média numérique dès sa capture, et ce jusqu'à ce que le tiers de confiance le certifie.

Ainsi, le serveur distant 101 et/ou le tiers de confiance 120 effectue(nt) une vérification de conformité du marquage unique sur le ou les médias numériques marqué pour s'assurer que le média à certifier a bien été capturé conformément au procédé selon l'invention.

Alternativement ou en combinaison, l'appareil de capture est également programmé pour effectuer un cryptage 111 du fichier à certifier 106 et/ou de chaque média à certifier avec une clé de cryptage 112, dès que les prises de vues sont capturées.

Pour le cryptage, le serveur distant 101 est programmé pour transmettre à l'appareil de capture une clé de cryptage 112 des médias numériques à certifier, de préférence au moment de l'installation de l'application informatique sur l'appareil de capture ou au moment de la création de chaque dossier. Ce numéro de cryptage constitue la racine de chaque média pour effectuer le cryptage 111.

Ce cryptage est automatique et indépendant de l'utilisateur, de sorte que ce dernier ne peut ouvrir les médias à certifier, même s'il arrivait à forcer l'accès à la mémoire dédiée dans l'appareil (deuxième espace en mémoire morte).

Alternativement ou en combinaison, l'appareil de capture est également programmé pour attribuer un identifiant unique sur le ou chaque média numérique.

À fin d'attribution de cet identifiant, le serveur distant 101 est programmé pour transmettre à l'appareil de capture numéro d'identifiant unique pour chaque média numérique à certifier après la connexion de l'utilisateur, c'est-à-dire après son identification par le système et dès qu'un média numérique est capturé. Alternativement, si l'appareil de capture est hors ligne au moment de la capture du ou des médias numériques, le serveur distant 101 est programmé pour attribuer un identifiant unique au ou à chaque média numérique dès réception du fichier à certifier 106 sur le serveur quand l'appareil de capture est à nouveau en ligne.

En d'autres termes, le serveur distant 101 attribue immédiatement le numéro unique à chaque média numérique lorsque l'appareil de capture est connecté au serveur distant 101, ou de manière différée lorsqu'il reçoit le fichier à certifier 106 lors du retour en ligne de l'appareil de capture. Ce numéro unique assure la traçabilité des médias numériques.

Pour que le tiers de confiance puisse visionner les médias à certifier, le serveur distant 101 est programmé pour transmettre par mail ou par tous autres moyens électroniques (sms, OR code, portail de gestion, etc.) au tiers de confiance 120 une clé de décryptage 113 au moment où il souhaite visualiser pour la première fois les médias à certifier. Cette dernière n'est jamais transmise à l'utilisateur qui ne peut donc modifier les médias une fois cryptés, c'est-à-dire au moment où les prises de vues sont capturées.

De préférence, l'utilisateur ne peut accéder dans son espace personnel aux fichiers qu'il a transmis pour certification tant que le tiers de confiance n'a pas examiné ces fichiers. Cela renforce la sécurité pour interdire toute modification ultérieure des prises de vue entre le moment de leur prise et le moment de leur examen par le tiers de confiance, ce qui améliore encore la valeur probante du système selon l'invention et de la certification par le tiers de confiance.

Ainsi, une fois que l'appareil de capture 103 a permis la capture des prises de vues, leur horodatage, leur géolocalisation, leur marquage et éventuellement leur cryptage, et qu'il a créé le fichier à certifier 106 correspondant (dans le premier espace de mémoire en mémoire vive), il est programmé pour transmettre directement au serveur distant 101 le fichier à certifier 106, si une connexion au réseau de télécommunication peut être établie (mode en ligne), et sans que l'utilisateur ne puisse les modifier après prise de vue.

Si une connexion au réseau de télécommunication ne peut être établie (mode hors ligne), l'appareil de capture 103 est programmé pour stocker temporairement des médias numériques à certifier (ou le fichier à certifier 106) dans la mémoire dédiée créée préalablement (deuxième espace de mémoire en mémoire morte), sans que l'utilisateur ne puisse les modifier après prise de vue.

Dès que la connexion au réseau est rétablie, l'appareil de capture 103 est programmé pour transmettre au serveur distant 101 le fichier à certifier 106 et pour effacer ce fichier et les médias numériques de l'espace mémoire dédié (le deuxième espace en mémoire morte).

Avantageusement, l'appareil de capture 103 est programmé pour supprimer de cette mémoire dédiée, après une durée prédéterminée (par exemple 12h00), le fichier à certifier 106 si ce dernier n'a pas pu être transmis au serveur distant, par exemple dans le cas d'une déconnexion prolongée avec le réseau de communication 102. Cette variante permet de s'assurer que la durée entre les prises de vue et leur transmission ne dépasse pas un délai de sûreté au-delà duquel un piratage du système pourrait permettre une manipulation des médias. Cela permet également que l'étape de certification par le tiers de confiance ne soit pas trop éloignée dans le temps de la capture des prises de vues, ce qui pourrait affaiblir la force probante de la certification.

Une fois les médias à certifier reçus par le serveur distant sous la forme d'un fichier à certifier 106, le serveur distant 101 est programmé pour transmettre à un tiers de confiance le fichier à certifier 106 comprenant ledit au moins un média numérique à certifier 105a-105b-105C et les données d'horodatage 107a-107b-107C et de géolocalisation 108a-108b-108C, ainsi, avantageusement, que des données d'altimétrie, d'angle de vue et/ou d'assiette (angle de roulis, de tangage et/ou de lacet mesurés et transmis par un gyroscope) de l'appareil de capture.

En combinaison, d'autres types de données peuvent être captées ou récupérées par l'appareil de capture de média et transmises au serveur distant, telles que des données de température, d'hydrométrie, de pression atmosphérique, de radioactivité, de taux de CO2 ou encore de vent (force et direction). Dans ce cas, l'appareil de capture est avantageusement relié à d'un capteur idoine, tel qu'un hygromètre, un anémomètre, un thermomètre, etc.

Si le fichier à certifier 106 est crypté, le serveur distant 101 transmet également une clé de décryptage 113 au tiers de confiance 120 pour qu'il puisse décrypter le fichier et visualiser les médias à certifier.

Plus précisément, dans un premier mode de réalisation, le serveur distant 101 est programmé pour transmettre au tiers de confiance 120 un message d'avertissement qu'un fichier à certifier 106 comprenant ledit au moins un média numérique à certifier est présent sur le serveur et en attente de certification.

Une fois le tiers de confiance connecté au système à l'aide d'un identifiant/mot de passe, le serveur distant 101 lui transmet le fichier à certifier106. Cette transmission peut se faire en téléchargeant le fichier sur l'ordinateur local du tiers de confiance pour une consultation et une certification ultérieure. Alternativement, cette transmission peut se faire en affichant directement sur une interface du tiers de confiance le ou les médias numériques à certifier.

Si le tiers de confiance certifie les médias, il génère un procès-verbal de certification 114 signé électroniquement et l'enregistre sur le serveur distant. Ce procès-verbal de certification 114 est alors mis à disposition de l'utilisateur dans son espace personnel d'où il peut le consulter, le télécharger ou le partager avec un tiers.

La signature électronique n'est pas une simple copie numérique, mais elle est générée grâce à un certificat de signature électronique obtenu auprès d'une autorité référencée.

Le tiers de confiance peut certifier le ou les médias numériques contenus dans le fichier à certifier 106 au moins en vérifiant que ces médias ont bien été capturés avec le système selon l'invention, ce qui lui permet de s'assurer qu'ils n'ont pas été stockés dans la bibliothèque native de l'appareil de capture 103, et donc qu'ils n'ont pas pu être modifiés par l'utilisateur. Avantageusement, il peut en outre vérifier que le marquage et/ou le cryptage des médias est conforme à la clé de marquage et/ou de cryptage. Grâce à ces éléments, il est certain que les médias ont bien été capturés avec le système selon l'invention et qu'ils n'ont pas été modifiés depuis leur capture. Il peut également certifier le nombre de médias reçus. Il peut également certifier l'horodatage et la géolocalisation qui sont attachés à chaque média puisque ces renseignements ont été ajoutés automatiquement par le système juste après la capture des médias et avant leur envoi (directement en mode « en ligne » ou après stockage temporaire, de préférence crypté dans une mémoire inaccessible à l'utilisateur en mode « hors-ligne ») au serveur distant 101 pour stockage.

Dans un mode de réalisation préféré, la certification comprend une vérification, par le tiers de confiance, de la conformité des médias à certains critères qualitatifs, tels que la netteté des photos, la visibilité et/ou la compréhensibilité du fait juridique illustré par les médias, sa conformité aux lois, etc.

Alternativement ou en combinaison, la certification comprend une vérification, par le tiers de confiance, de la conformité des prises de vues à un protocole prédéfini, tels que le nombre de prises de vue minimum requis, leur enchaînement, les angles de vues différents, etc.

Si le tiers de confiance ne certifie pas au moins un des médias à certifier, comme par exemple une ou deux photos d'un groupe de trois photos, voire les trois photos du même groupe, par exemple parce que les prises de vue sont floues ou que les valeurs d'agrandissement ne sont pas conformes, il génère une notification de non-certification de cette ou des photos qui est enregistrée sur le serveur distant 101.

Ce dernier est alors programmé pour transmettre à l'utilisateur un avertissement de non-certification visible sur l'espace personnel de l'utilisateur.

Dans un mode de réalisation alternatif, le serveur distant 101 est programmé pour transmettre le fichier à certifier crypté 106 comprenant ledit au moins un média numérique à certifier, sans clé de décryptage à un premier tiers de confiance conservateur, pour qu'il stocke le fichier crypté. Ce premier tiers de confiance peut avantageusement dresser un Procès-Verbal de réception avec le nombre de fichiers cryptés et éventuellement le nombre de médias numériques par fichiers cryptés reçus, mais ne pouvant pas les ouvrir, il ne peut les examiner et certifier leur pertinence, ni les modifier par inadvertance.

Parallèlement, le serveur distant 101 est programmé pour transmettre la clé de décryptage du fichier à certifier crypté 106, sans ledit fichier, à un deuxième tiers de confiance conservateur, pour qu'il stocke la clé de décryptage. Ce deuxième tiers de confiance peut avantageusement dresser un Procès-Verbal de réception de clé de décryptage.

Lorsque l'utilisateur a besoin de faire certifier les médias, le serveur distant, sur requête de l'utilisateur, transmet une instruction de collecte à un tiers de confiance certificateur, avantageusement différent du premier et du deuxième tiers de confiance conservateur, pour qu'il collecte le fichier à certifier crypté 106 et la clé de décryptage respectivement auprès du premier et du deuxième tiers de confiance conservateur.

Une fois connecté au serveur distant 101, le tiers de confiance certificateur décrypte le fichier à certifier crypté 106 à l'aide de la clé de décryptage, et l'affiche sur une interface pour certification.

Si le tiers de confiance certificateur certifie les médias, il génère un procès-verbal de certification 114 signé électroniquement et l'enregistre sur le serveur distant. Ce procès-verbal de certification 114 est alors mis à disposition de l'utilisateur dans son espace personnel d'où il peut le consulter, le télécharger ou le partager avec un tiers.

Si le tiers de confiance certificateur ne certifie pas les médias, par exemple parce que les prises de vue sont floues ou que les valeurs d'agrandissement ne sont pas conformes, il génère une notification de non-certification pour la totalité ou un ou plusieurs médias qui est enregistrée sur le serveur distant 101.

Ce dernier est alors programmé pour transmettre à l'utilisateur un avertissement de non-certification de la totalité ou bien d'une partie des médias.

De préférence, l'étape de transmission du fichier à certifier 106 à un tiers de confiance comprend une étape préliminaire de sélection du tiers de confiance parmi une liste de tiers de confiance préenregistrés, la sélection résultant d'une règle de sélection.

En particulier, dans un mode de réalisation préféré, le serveur distant est programmé pour choisir un tiers de confiance en fonction des coordonnées géographiques comprises dans le fichier à certifier 106.

Ainsi, la règle de sélection comprend la comparaison des coordonnées géographiques comprises dans le fichier à certifier 106 avec des coordonnées géographiques représentatives de chaque tiers de confiance préenregistré.

Le serveur distant peut alors choisir le tiers de confiance le plus proche géographiquement des coordonnées géographiques comprises dans le fichier à certifier 106. Alternativement, le tiers de confiance peut être choisi au hasard ou selon une règle de préférence (par exemple le nombre de certifications déjà effectuées) parmi une pluralité de tiers de confiance dont les coordonnées géographiques représentatives se trouvent dans une zone géographique prédéterminée autour des coordonnées géographiques comprises dans le fichier à certifier 106. Par exemple, en France, les Huissiers de justice sont compétents juridiquement sur une zone géographique prédéterminée. Le serveur distant peut alors choisir un tiers de confiance parmi plusieurs qui sont compétents dans la zone géographique autour des coordonnées géographiques comprises dans le fichier à certifier 106.

Le système selon l'invention permet également de s'assurer du suivi des différentes étapes afin de s'assurer que la durée entre la constitution des médias à certifier et la certification n'est pas trop longue et renforcer, ainsi, la force probante des médias et du procès-verbal.

De préférence, l'étape de transmission du fichier à certifier 106 au serveur distant 101 comprend l'enregistrement d'un horaire de réception du fichier à certifier 106 par le serveur distant 101. Ce dernier est également programmé pour calculer le temps écoulé depuis cet horaire de réception du fichier à certifier, et pour comparer le temps écoulé depuis l'horaire de réception du fichier à certifier et un délai de rappel prédéterminé, par exemple de 48 heures, éventuellement en prenant compte des jours ouvrés.

Lorsque l'horaire de réception du fichier à certifier 106 par le serveur de stockage est supérieur au délai de rappel prédéterminé, le serveur de stockage est programmé pour émettre un rappel au tiers de confiance afin qu'il procède à la certification du fichier.

De préférence, le serveur distant est également programmé pour comparer le temps écoulé depuis l'horaire de réception du fichier à certifier 106 et un délais de réaffectation à un autre tiers de confiance en respectant une règle d'attribution (territorialité, proximité du fait juridique, disponibilité, etc.). En complément, le serveur distant peut également être programmé pour émettre un avertissement à l'utilisateur lorsque le délai calculé est supérieur au délai de réaffectation prédéterminé. L'utilisateur est ainsi averti que les médias n'ont pas encore pu être certifiés.

Dans un mode de réalisation particulier, lorsque le média à certifier est constitué par un ensemble de données de distances représentant une cartographie tridimensionnelle du fait juridique, et l'étape de transmission du fichier à certifier 106 comprend l'envoi à une imprimante 3D des données de distance et une commande pour fabriquer une reconstitution tridimensionnelle du fait juridique.

La figure 2 est un diagramme illustrant le procédé de certification selon l'invention mis en oeuvre par le système de certification décrit précédemment.

À l'étape a), le procédé prévoit de créer une mémoire dédiée dans l'appareil, inaccessible à l'utilisateur, pour traiter et/ou stocker des médias numériques à certifier, et interdire l'enregistrement des médias numériques dans la bibliothèque native de l'appareil de capture.

À l'étape b), le procédé prévoit d'afficher sur l'interface une commande d'activation pour débuter une action de certification. L'étape b) peut comprendre une sous-étape préliminaire b0) de renseignement d'une durée de l'action de certification. Cette durée définit le temps pendant lequel les médias à certifier peuvent être capturés.

Par exemple, l'utilisateur peut prendre des photos pendant un délai de cinq jours dans le même dossier. Pour se faire, il sélectionne le premier jour la commande "certifier sur 5 jours". Les médias numériques pris chaque jour ne pourront plus être modifiés ni commentés le lendemain de leur prise de vue afin de s'assurer de façon impartiale de l'évolution ou non du fait juridique devant faire l'objet d'une certification.

À l'étape c), le procédé prévoit, lorsque la commande d'activation a été sélectionnée par l'utilisateur, de requérir la prise d'au moins deux, de préférence au moins trois vues du fait juridique par l'utilisateur, selon des valeurs d'agrandissement différentes pour créer au moins un média numérique à certifier.

L'étape c) peut comprendre une sous-étape préliminaire c0) de renseignement par l'utilisateur d'une taille approximative du fait juridique, les premières, deuxièmes et éventuellement troisièmes valeurs d'agrandissement étant calculées en fonction de la taille approximative du fait juridique.

À l'étape d), le procédé prévoit de générer un fichier à certifier 106 comprenant ledit au moins un média numérique à certifier 105a, 105b, 105c, un horaire de prise de vue dudit au moins un média numérique à certifier et des coordonnées géographiques de l'appareil à l'horaire de prise de vue.

À l'étape e), le procédé prévoit, si une connexion au réseau de télécommunication ne peut être établie, de stocker temporairement pendant une durée prédéterminée les médias numériques ou le fichier à certifier 106 dans la mémoire dédiée inaccessible à l'utilisateur, et, si une connexion au réseau de télécommunication peut être établie, de transmettre le fichier à certifier (contenant ledit au moins un média numérique à certifier) 106 au serveur de stockage distant via le réseau de télécommunication.

Entre l'étape e) et l'étape g), le procédé peut prévoir une étape f) de vérification de conformité du marquage unique sur ledit au moins un média numérique à certifier lorsque le procédé prévoir un tel marquage à l'étape d).

À l'étape g), le procédé prévoit de transmettre le fichier à certifier 106 comprenant ledit au moins un média numérique à certifier 105a, 105b, 105c à un tiers de confiance pour certification.

L'étape g) peut comprendre une sous-étape préliminaire g0) de sélection du tiers de confiance parmi une liste de tiers de confiance préenregistrés, selon une règle de sélection.

Dans une première variante V1, l'étape g) comprend une étape g1) de transmission à un tiers de confiance d'un message d'avertissement qu'un fichier à certifier 106 comprenant ledit au moins un média numérique à certifier 105a, 105b, 105c est présent sur le serveur, une étape g2) d'affichage sur une interface du tiers de confiance du média numérique à certifier lorsque le tiers de confiance se connecte au serveur, et une étape g3) d'enregistrement sur le serveur d'un procès-verbal de certification 114 si le tiers de confiance certifie ledit au moins un média numérique à certifier, ou de transmission à l'utilisateur d'un avertissement de non-certification si le tiers de confiance ne certifie pas ledit au moins un média numérique à certifier.

Dans une deuxième variante V2, si le fichier à certifier 106 a été crypté à l'étape d), l'étape g) comprend une étape g'1) de transmission à un tiers de confiance d'une clé de décryptage et d'un message d'avertissement qu'un fichier à certifier crypté 106 comprenant ledit au moins un média numérique à certifier 106 est présent sur le serveur, une étape g'2) de décryptage et d'affichage du fichier à certifier décrypté sur une interface du tiers de confiance, lorsque le tiers de confiance se connecte au serveur, et une étape g'3) d'enregistrement sur le serveur d'un procès-verbal de certification 114 si le tiers de confiance certifie ledit au moins un média numérique à certifier, ou de transmission à l'utilisateur d'un avertissement de non-certification si le tiers de confiance ne certifie pas ledit au moins un média numérique à certifier.

Dans une troisième variante V3, si le fichier à certifier 106 a été crypté à l'étape d), l'étape g) comprend une étape g"1) de transmission du fichier à certifier crypté comprenant ledit au moins un média numérique à certifier, sans clé de décryptage à un premier tiers de confiance conservateur, une étape g"2) de transmission de la clé de décryptage du fichier à certifier crypté, sans ledit fichier, à un deuxième tiers de confiance conservateur, une étape g"3) de collecte, par un tiers de confiance certificateur, du fichier à certifier crypté et de la clé de décryptage respectivement auprès du premier et du deuxième tiers de confiance conservateur, une étape g"4) de décryptage et d'affichage du fichier à certifier décrypté sur une interface du tiers de confiance certificateur lorsque le tiers de confiance se connecte au serveur, et une étape g"5) d'enregistrement sur le serveur d'un procès-verbal de certification 114 si le tiers de confiance certificateur certifie ledit au moins un média numérique à certifier, ou de transmission à l'utilisateur d'un avertissement de non-certification si le tiers de confiance certificateur ne certifie pas ledit au moins un média numérique à certifier.

À l'étape h), le procédé prévoit d'émettre et enregistrer sur le serveur un procès-verbal de certification 114 si le média numérique est certifié (étape hY)), ou émettre et transmettre à l'utilisateur un avertissement de non-certification si le média numérique n'est pas certifié (étape hN)).

Le procédé peut également prévoir une étape i) de calcul de délai entre un horaire de réception du fichier à certifier 106 par le serveur distant 101 et un horaire de connexion du tiers de confiance au serveur de stockage, de comparaison entre le délai calculé et un délai de réaffectation prédéterminé. L'étape i) comprend en outre une réaffectation du fichier à certifier 106 à un autre tiers de confiance si le délai calculé dépasse le délai de réaffectation. En complément, le procédé peut également prévoir que l'étape i) comprend l'émission d'un avertissement à l'utilisateur lorsque le délai calculé est supérieur au délai de réaffectation prédéterminé. L'utilisateur est ainsi averti que les médias n'ont pas encore pu être certifiés.

Le procédé peut également prévoir une étape j) de calcul de temps écoulé depuis un horaire de réception du fichier à certifier 106 par le serveur de stockage, de comparaison entre le temps écoulé depuis l'horaire de réception du fichier à certifier 106 par le serveur de stockage et un délai de rappel prédéterminé, et l'émission d'un rappel au tiers de confiance lorsque l'horaire de réception du fichier à certifier 106 par le serveur de stockage est supérieur au délai de rappel prédéterminé

Le procédé de certification selon l'invention permet une certification à haute force probante, de manière rapide, efficace et entièrement digitale (sans édition de papier). Il permet de réduire les déplacements des interlocuteurs susceptibles d'être intéressés par le contenu du PV (utilisateur, tiers de confiance, sous-traitant, collectivités locales, riverains, presse, experts) qui n'ont plus à se déplacer sur site pour convenir d'un accord sur la réalité d'une situation factuelle. De cette façon le procédé contribue à réduire les émissions de CO2 et à diminuer le bilan carbone de tous les interlocuteurs.

## Revendications

1. Procédé de certification par un tiers de confiance de médias numériques (105a, 105b, 105c) représentatifs d'un fait juridique, capturés par un utilisateur (U) au moyen d'un appareil de capture de médias numériques (103), tels que des photos ou des vidéos, l'appareil (103) étant muni d'une caméra numérique, d'une bibliothèque native de stockage de médias numériques, d'une interface homme/machine (104), et d'un émetteur/récepteur apte à transmettre les médias numériques à au moins un serveur distant (101) via un réseau de télécommunication (102), le procédé étant **caractérisé en ce qu'**il comprend les étapes suivantes :
a) créer une mémoire dédiée dans l'appareil (103), différente de la bibliothèque native et inaccessible à l'utilisateur, pour traiter et/ou stocker des médias numériques à certifier, et interdire l'enregistrement des médias numériques dans la bibliothèque native de l'appareil de capture ;
b) afficher sur l'interface (104) une commande d'activation pour débuter une action de certification ;
c) lorsque la commande d'activation a été sélectionnée par l'utilisateur, requérir la prise d'au moins une, de préférence au moins deux, avantageusement au moins trois prises de vues du fait juridique par l'utilisateur, pour créer au moins un média numérique à certifier ;
d) générer un fichier à certifier (106) comprenant ledit au moins un média numérique à certifier (105a, 105b, 105c), un horaire de prise de vue dudit au moins un média numérique à certifier et des coordonnées géographiques de l'appareil à l'horaire de prise de vue ;
e) si une connexion au réseau de télécommunication ne peut être établie, stocker temporairement pendant une durée prédéterminée le fichier à certifier (106) dans la mémoire dédiée inaccessible à l'utilisateur, et, si une connexion au réseau de télécommunication (102) peut être établie, transmettre le fichier à certifier (106) au serveur de stockage distant (101) via le réseau de télécommunication (102) ;
g) transmettre le fichier à certifier (106) comprenant ledit au moins un média numérique à certifier au tiers de confiance (120) pour certification ;
h) émettre et enregistrer sur le serveur distant (101) un procès-verbal de certification (114) si ledit au moins un média numérique est certifié, ou émettre et transmettre à l'utilisateur un avertissement de non-certification si ledit au moins un média numérique n'est pas certifié.

2. Procédé de certification selon la revendication 1, dans lequel l'étape d) comprend, en outre, l'apposition d'un marquage unique sur le dit au moins un média numérique à certifier pour créer au moins un média numérique marqué.

3. Procédé de certification selon l'une quelconque des revendications 1 ou 2, dans lequel l'étape g) comprend une étape g1) de transmission au tiers de confiance d'un message d'avertissement qu'un fichier à certifier comprenant ledit au moins un média numérique à certifier est présent sur le serveur, une étape g2) d'affichage sur une interface du tiers de confiance du média numérique à certifier lorsque le tiers de confiance se connecte au serveur.

4. Procédé de certification selon l'une quelconque des revendications 1 à 3, dans lequel l'étape d) comprend, en outre, le cryptage du fichier à certifier et/ou des médias numériques à certifier avec une clé de cryptage, et l'étape g) comprend la transmission au tiers de confiance d'une clé de décryptage.

5. Procédé de certification selon l'une quelconque des revendications 1 à 4, dans lequel le média numérique à certifier est du type photo, l'étape c) comprenant la prise d'au moins deux, avantageusement au moins trois prises de vue du fait juridique par l'utilisateur, depuis un même angle de vue et selon des valeurs d'agrandissement différentes pour créer au moins deux, de préférence au moins trois photos numériques à certifier.

6. Procédé de certification selon l'une quelconque des revendications 1 à 4, dans lequel le média numérique à certifié est du type vidéo, l'étape c) comprenant la prise d'une multitude de prises de vue du fait juridique par l'utilisateur selon des valeurs d'agrandissement différentes et éventuellement des angles de vue différents, pour créer au moins une vidéo numérique à certifier.

7. Procédé de certification selon l'une quelconque des revendications 1 à 6, dans lequel les coordonnées géographiques de l'appareil enregistrées à l'étape d) sont mesurées à l'horaire de chaque prise de vue, puis traitées de manière à obtenir une position géographique moyenne entre une première prise de vue et une dernière prise de vue, cette position géographique moyenne étant enregistrée dans le fichier à certifier.

8. Procédé de certification selon l'une quelconque des revendications 1 à 7, dans lequel l'étape g) comprend une sous-étape préliminaire g0) de sélection du tiers de confiance parmi une liste de tiers de confiance préenregistrés, la sélection résultant d'une règle de sélection comprenant la comparaison des coordonnées géographiques comprises dans le fichier à certifier avec des coordonnées géographiques représentatives de chaque tiers de confiance préenregistré, et la sélection d'un tiers de confiance le plus proche géographiquement des coordonnées géographiques comprises dans le fichier à certifier.

9. Procédé de certification selon l'une quelconque des revendications 1 à 8, dans lequel, l'étape c) comprend une mesure automatique de distance entre l'appareil de capture de médias numériques et le fait juridique, et la production d'un signal d'avertissement lorsque l'appareil est situé à une distance prédéterminée du fait juridique pour permettre la prise d'au moins deux, de préférence au moins trois, prises de vues du fait juridique par l'utilisateur, selon des valeurs d'agrandissement différentes.

10. Procédé de certification selon l'une quelconque des revendications 1 à 9, dans lequel, l'étape c) comprend une requête d'une première prise de vue à une première valeur d'agrandissement, puis une requête d'une deuxième prise de vue à une deuxième valeur d'agrandissement, différente de la première, puis, de préférence, une requête d'une troisième prise de vue à une troisième valeur d'agrandissement, différente de la première et de la deuxième, pour permettre la prise d'au moins deux, de préférence au moins trois, prises de vues du fait juridique par l'utilisateur, selon des valeurs d'agrandissement différentes.

11. Procédé de certification selon l'une quelconque des revendications 1 à 10, dans lequel, l'étape c) comprend la capture de données de distances entre l'appareil de capture et le fait juridique, et l'étape g) comprend l'envoi à une imprimante 3D des données de distance et une commande pour fabriquer une reconstitution tridimensionnelle du fait juridique.

12. Procédé de certification selon l'une quelconque des revendications 1 à 11, dans lequel, l'étape e) comprend l'enregistrement d'un horaire de réception du fichier à certifier par le serveur de stockage, et l'étape g) comprend l'enregistrement d'un horaire de connexion du tiers de confiance au serveur de stockage, le procédé de certification comprenant, en outre, une étape i) de calcul de délai entre l'horaire de réception du fichier à certifier par le serveur de stockage et l'horaire de connexion du tiers de confiance au serveur de stockage, de comparaison entre le délai calculé et un délai de réaffectation prédéterminé, et de réaffectation du fichier à certifier (106) à un autre tiers de confiance.

13. Procédé de certification selon l'une quelconque des revendications 1 à 12, dans lequel, l'étape e) comprend l'enregistrement d'un horaire de réception du fichier à certifier par le serveur de stockage, le procédé de certification comprenant, en outre, une étape j) de calcul de temps écoulé depuis l'horaire de réception du fichier à certifier par le serveur de stockage, de comparaison entre le temps écoulé depuis l'horaire de réception du fichier à certifier par le serveur de stockage et un délai de rappel prédéterminé, et l'émission d'un rappel au tiers de confiance lorsque l'horaire de réception du fichier à certifier par le serveur de stockage est supérieur au délai de rappel prédéterminé.

14. Système de certification par un tiers de confiance de médias numériques représentatifs d'un fait juridique, comprenant au moins un serveur distant programmé pour communiquer via un réseau de télécommunication avec au moins un appareil de capture de médias numériques d'un utilisateur, l'appareil de capture étant muni d'une caméra numérique, d'une bibliothèque native de stockage des médias numériques capturés accessible par l'utilisateur, d'une interface homme-machine, et d'un émetteur/récepteur apte à transmettre les médias numériques audit serveur distant, **caractérisé en ce que** :
- l'appareil de capture comprend une mémoire dédiée distincte de la bibliothèque native, inaccessible à l'utilisateur, pour traiter et/ou stocker des médias numériques à certifier ; et **en ce que**
- l'appareil de capture et le serveur sont programmés pour mettre en oeuvre le procédé selon l'une quelconque des revendications 1 à 13.

15. Système de certification selon la revendication 14, dans lequel l'appareil de capture comprend, en outre, un capteur de distance, l'appareil étant programmé pour mesurer automatiquement une distance entre l'appareil de capture de médias numériques et le fait juridique, et pour produire un signal d'avertissement lorsque l'appareil est situé à une distance prédéterminée du fait juridique pour permettre la prise d'au moins deux, de préférence au moins trois, prises de vues du fait juridique par l'utilisateur, selon des valeurs d'agrandissement différentes.

16. Système de certification selon la revendication 15 dans lequel le capteur de distance est associé à un système de balayage angulaire programmé pour effectuer un balayage d'une zone définie comprenant le fait juridique et obtenir une ou plusieurs prises de vues constituées par des données de distance, l'appareil de capture étant programmé pour réaliser une cartographie en trois dimensions la surface de ladite zone à partir des données de distances obtenues, et pour générer un fichier à certifier comprenant ladite cartographie en tant que média numérique à certifier, un horaire d'obtention de la cartographie, et des coordonnées géographiques de l'appareil à l'horaire de la cartographie.

## Patentansprüche

1. Verfahren zur Zertifizierung, durch eine vertrauenswürdige dritte Instanz, von für einen rechtlichen Sachverhalt repräsentativen digitalen Medien (105a, 105b, 105c), die von einem Benutzer (U) mittels eines Erfassungsgeräts (103) digitaler Medien wie Fotos oder Videos erfasst werden, wobei das Gerät (103) mit einer digitalen Kamera, einer nativen Bibliothek zur Speicherung digitaler Medien, einer Mensch/Maschine-Schnittstelle (104) und einem Sender/Empfänger ausgestattet ist, der fähig ist, die digitalen Medien über ein Telekommunikationsnetz (102) an mindestens einen Remote-Server (101) zu übertragen, wobei das Verfahren **dadurch gekennzeichnet ist, dass** es die folgenden Schritte enthält:
a) Erzeugen eines dedizierten Speichers im Gerät (103), der sich von der nativen Bibliothek unterscheidet und für den Benutzer nicht zugänglich ist, um zu zertifizierende digitale Medien zu verarbeiten und/oder zu speichern, und die Aufzeichnung der digitalen Medien in der nativen Bibliothek des Erfassungsgeräts zu verhindern;
b) Anzeige eines Aktivierungsbefehls an der Schnittstelle (104), um eine Zertifizierungsaktion zu beginnen;
c) wenn der Aktivierungsbefehl vom Benutzer ausgewählt wurde, Anfordern der Aufnahme von mindestens einer, vorzugsweise mindestens zwei, vorteilhafterweise mindestens drei Bildaufnahmen des rechtlichen Sachverhalts durch den Benutzer, um mindestens ein zu zertifizierendes digitales Medium zu erzeugen;
d) Generieren einer zu zertifizierenden Datei (106), die das mindestens eine zu zertifizierende digitale Medium (105a, 105b, 105c), eine Uhrzeit der Bildaufnahme des mindestens einen zu zertifizierenden digitalen Mediums und geographische Koordinaten des Geräts bei der Uhrzeit der Bildaufnahme enthält;
e) wenn keine Verbindung mit dem Telekommunikationsnetz hergestellt werden kann, vorübergehendes Speichern während einer vorbestimmten Dauer der zu zertifizierenden Datei (106) im für den Benutzer nicht zugänglichen dedizierten Speicher, und wenn eine Verbindung mit dem Telekommunikationsnetz (102) hergestellt werden kann, Übertragen der zu zertifizierenden Datei (106) an den Remote-Speicherserver (101) über das Telekommunikationsnetz (102);
g) Übertragen der zu zertifizierenden Datei (106), die das mindestens eine zu zertifizierende digitale Medium enthält, an die vertrauenswürdige dritte Instanz (120) zur Zertifizierung;
h) Senden und Speichern eines Zertifizierungsprotokolls (114) auf dem Remote-Server (101), wenn das mindestens eine digitale Medium zertifiziert ist, oder Senden und Übertragen an den Benutzer einer Warnung der Nicht-Zertifizierung, wenn das mindestens eine digitale Medium nicht zertifiziert ist.

2. Zertifizierungsverfahren nach Anspruch 1, wobei der Schritt d) außerdem die Anbringung einer eindeutigen Markierung auf dem mindestens einen zu zertifizierenden digitalen Medium enthält, um mindestens ein markiertes digitales Medium zu erzeugen.

3. Zertifizierungsverfahren nach einem der Ansprüche 1 oder 2, wobei der Schritt g) einen Schritt g1) der Übertragung einer Warnmeldung an die vertrauenswürdige dritte Instanz, dass eine das mindestens eine zu zertifizierende digitale Medium enthaltende zu zertifizierende Datei auf dem Server vorhanden ist, einen Schritt g2) der Anzeige des zu zertifizierenden digitalen Mediums auf einer Schnittstelle der vertrauenswürdigen dritten Instanz enthält, wenn die vertrauenswürdige dritte Instanz sich mit dem Server verbindet.

4. Zertifizierungsverfahren nach einem der Ansprüche 1 bis 3, wobei der Schritt d) außerdem die Verschlüsselung der zu zertifizierenden Datei und/oder der zu zertifizierenden digitalen Medien mit einem Verschlüsselungsschlüssel enthält, und der Schritt g) die Übertragung eines Entschlüsselungsschlüssels an die vertrauenswürdige dritte Instanz enthält.

5. Zertifizierungsverfahren nach einem der Ansprüche 1 bis 4, wobei das zu zertifizierende digitale Medium vom Typ Foto ist, wobei der Schritt c) die Aufnahme von mindestens zwei, vorteilhafterweise mindestens drei Bildaufnahmen des rechtlichen Sachverhalts durch den Benutzer, aus einem gleichen Blickwinkel und gemäß verschiedenen Vergrößerungswerten enthält, um mindestens zwei, vorzugsweise mindestens drei zu zertifizierende digitale Fotos zu erzeugen.

6. Zertifizierungsverfahren nach einem der Ansprüche 1 bis 4, wobei das zu zertifizierende digitale Medium vom Typ Video ist, wobei der Schritt c) die Aufnahme einer Vielzahl von Bildaufnahmen des rechtlichen Sachverhalts durch den Benutzer gemäß verschiedenen Vergrößerungswerten und ggf. verschiedenen Blickwinkeln enthält, um mindestens ein zu zertifizierendes digitales Video zu erzeugen.

7. Zertifizierungsverfahren nach einem der Ansprüche 1 bis 6, wobei die im Schritt d) gespeicherten geographischen Koordinaten des Geräts zur Uhrzeit jeder Bildaufnahme gemessen, dann verarbeitet werden, um eine mittlere geographische Position zwischen einer ersten Bildaufnahme und einer letzten Bildaufnahme zu erhalten, wobei diese mittlere geographische Position in der zu zertifizierenden Datei gespeichert wird.

8. Zertifizierungsverfahren nach einem der Ansprüche 1 bis 7, wobei der Schritt g) einen vorhergehenden Teilschritt g0) der Auswahl der vertrauenswürdigen dritten Instanz aus einer Liste von vorab gespeicherten vertrauenswürdigen dritten Instanzen enthält, wobei die Auswahl aus einer Auswahlregel resultiert, die den Vergleich der in der zu zertifizierenden Datei enthaltenen geographischen Daten mit für jede vorab gespeicherte vertrauenswürdige dritte Instanz repräsentativen geographischen Koordinaten und die Auswahl einer vertrauenswürdigen dritten Instanz enthält, die den in der zu zertifizierenden Datei enthaltenen geographischen Daten geographisch am nächsten liegt.

9. Zertifizierungsverfahren nach einem der Ansprüche 1 bis 8, wobei der Schritt c) eine automatische Entfernungsmessung zwischen dem Erfassungsgerät digitaler Medien und dem rechtlichen Sachverhalt und die Erzeugung eines Warnsignals enthält, wenn das Gerät sich in einer vorbestimmten Entfernung vom rechtlichen Sachverhalt befindet, um die Aufnahme von mindestens zwei, vorzugsweise mindestens drei Bildaufnahmen des rechtlichen Sachverhalts durch den Benutzer gemäß verschiedenen Vergrößerungswerten zu ermöglichen.

10. Zertifizierungsverfahren nach einem der Ansprüche 1 bis 9, wobei der Schritt c) eine Anforderung einer ersten Bildaufnahme mit einem ersten Vergrößerungswert, dann eine Anforderung einer zweiten Bildaufnahme mit einem zweiten Vergrößerungswert anders als der erste, dann vorzugsweise eine Anforderung einer dritten Bildaufnahme mit einem dritten Vergrößerungswert anders als der erste und der zweite enthält, um die Aufnahme von mindestens zwei, vorzugsweise mindestens drei Bildaufnahmen des rechtlichen Sachverhalts durch den Benutzer gemäß verschiedenen Vergrößerungswerten zu ermöglichen.

11. Zertifizierungsverfahren nach einem der Ansprüche 1 bis 10, wobei der Schritt c) die Erfassung von Daten von Entfernungen zwischen dem Erfassungsgerät und dem rechtlichen Sachverhalt enthält, und der Schritt g) das Senden der Entfernungsdaten an einen 3D-Drucker und einen Befehl enthält, um eine dreidimensionale Wiederherstellung des rechtlichen Sachverhalts anzufertigen.

12. Zertifizierungsverfahren nach einem der Ansprüche 1 bis 11, wobei der Schritt e) die Speicherung einer Uhrzeit des Empfangs der zu zertifizierenden Datei durch den Speicherserver enthält, und der Schritt g) die Speicherung einer Uhrzeit einer Verbindung der vertrauenswürdigen dritten Instanz mit dem Speicherserver enthält, wobei das Zertifizierungsverfahren außerdem einen Schritt i) der Berechnung einer Frist zwischen der Uhrzeit des Empfangs der zu zertifizierenden Datei durch den Speicherserver und der Uhrzeit der Verbindung der vertrauenswürdigen dritten Instanz mit dem Speicherserver, des Vergleichs zwischen der berechneten Frist und einer vorbestimmten Neuzuteilungsfrist, und der Neuzuteilung der zu zertifizierenden Datei (106) zu einer anderen vertrauenswürdigen dritten Instanz enthält.

13. Zertifizierungsverfahren nach einem der Ansprüche 1 bis 12, wobei der Schritt e) die Speicherung einer Uhrzeit des Empfangs der zu zertifizierenden Datei durch den Speicherserver enthält, wobei das Zertifizierungsverfahren außerdem einen Schritt j) der Berechnung der seit der Uhrzeit des Empfangs der zu zertifizierenden Datei durch den Speicherserver vergangenen Zeit, des Vergleichs der seit der Uhrzeit des Empfangs der zu zertifizierenden Datei durch den Speicherserver vergangenen Zeit und einer vorbestimmten Erinnerungsfrist und das Senden einer Erinnerung an die vertrauenswürdige dritte Instanz enthält, wenn die Uhrzeit des Empfangs der zu zertifizierenden Datei durch den Speicherserver länger ist als die vorbestimmte Erinnerungsfrist.

14. System zur Zertifizierung von für einen rechtlichen Sachverhalt repräsentativen digitalen Medien durch eine vertrauenswürdige dritte Instanz, das mindestens einen Remote-Server enthält,. der programmiert ist, über ein Telekommunikationsnetz mit mindestens einem Erfassungsgerät digitaler Medien eines Benutzers zu kommunizieren, wobei das Erfassungsgerät mit einer digitalen Kamera, einer nativen Bibliothek zum Speichern erfasster digitale Medien, die für den Benutzer zugänglich ist, einer Mensch-Maschine-Schnittstelle, und mit einem Sender/Empfänger ausgestattet ist, der fähig ist, die digitalen Medien an den Remote-Server zu übertragen, **dadurch gekennzeichnet, dass**:
- das Erfassungsgerät einen nicht für den Benutzer zugänglichen dedizierten Speicher anders als die native Bibliothek enthält, um zu zertifizierende digitale Medien zu verarbeiten und/oder zu speichern,
und dass
- das Erfassungsgerät und der Server programmiert sind, um das Verfahren nach einem der Ansprüche 1 bis 13 durchzuführen.

15. Zertifizierungssystem nach Anspruch 14, wobei das Erfassungsgerät außerdem einen Entfernungssensor enthält, wobei das Gerät programmiert ist, um automatisch eine Entfernung zwischen dem Erfassungsgerät digitaler Medien und dem rechtlichen Sachverhalt zu messen, und um ein Warnsignal zu erzeugen, wenn das Gerät sich in einer vorbestimmten Entfernung vom rechtlichen Sachverhalt befindet, um die Aufnahme von mindestens zwei, vorzugsweise mindestens drei Bildaufnahmen des rechtlichen Sachverhalts durch den Benutzer gemäß verschiedenen Vergrößerungswerten zu ermöglichen.

16. Zertifizierungssystem nach Anspruch 15, wobei der Entfernungssensor einem Winkelabtastsystem zugeordnet ist, das programmiert ist, um eine Abtastung einer den rechtlichen Sachverhalt enthaltenden definierten Zone auszuführen und eine oder mehrere aus Entfernungsdaten bestehende Bildaufnahmen zu erhalten, wobei das Erfassungsgerät programmiert ist, um eine dreidimensionale Kartographie der Oberfläche der Zone ausgehend von den erhaltenen Entfernungsdaten herzustellen, und um eine zu zertifizierende Datei, die die Kartographie als das zu zertifizierende digitale Medium enthält, eine Uhrzeit des Erhalts der Kartographie und geographische Koordinaten zur Zeit der Kartographie zu generieren.

## Claims

1. Certification method allowing a trusted third party to certify digital media (105a, 105b, 105c) representative of a juridical fact, said digital media being captured by a user (U) by means of a device (103) for capturing digital media, such as photographs or videos, the device (103) being equipped with a digital camera, with a native library for storing digital media, with a human-machine interface (104), and with a transceiver able to transmit the digital media to at least one remote server (101) via a telecommunications network (102), the method being **characterized in that** it comprises the following steps:
a) creating, in the device (103), a dedicated memory that is different from the native library and that is inaccessible to the user, for processing and/or storing digital media to be certified, and prohibiting storage of digital media in the native library of the capturing device;
b) displaying, on the interface (104), an activation command allowing a certification action to be initiated;
c) when the activation command has been selected by the user, requiring at least one, preferably at least two, advantageously at least three, shots/recordings of the juridical fact to be taken by the user, with a view to creating at least one digital medium to be certified;
d) generating a file to be certified (106) containing said at least one digital medium to be certified (105a, 105b, 105c), a shot/recording time and date, i.e. the time and date when said at least one digital medium to be certified was shot/recorded, and geographical coordinates of the device at the shot/recording time and date;
e) if a connection to the telecommunications network is unable to be set up, temporarily storing for a predetermined time the file to be certified (106) in the dedicated memory inaccessible to the user, and, if a connection to the telecommunications network (102) is able to be set up, transmitting the file to be certified (106) to the remote storage server (101) via the telecommunications network (102);
g) transmitting the file to be certified (106) containing said at least one digital medium to be certified to the trusted third party (120) for certification;
h) issuing and storing on the remote server (101) a certification report (114) if said at least one digital medium is certified, or issuing and transmitting to the user a non-certification warning if said at least one digital medium is not certified.

2. Certification method according to Claim 1, wherein step d) further comprises affixing a unique marking to said at least one digital medium to be certified to create at least one marked digital medium.

3. Certification method according to either one of Claims 1 and 2, wherein step g) comprises a step g1) of transmitting, to the trusted third party, a warning message indicating that a file to be certified containing said at least one digital medium to be certified is present on the server, and a step g2) of displaying, on an interface of the trusted third party, the digital medium to be certified when the trusted third party connects to the server.

4. Certification method according to any one of Claims 1 to 3, wherein step d) further comprises encrypting the file to be certified and/or the digital media to be certified with an encryption key, and step g) comprises transmitting a decryption key to the trusted third party.

5. Certification method according to any one of Claims 1 to 4, wherein the digital medium to be certified is photographic, step c) comprising the user taking at least two, advantageously at least three, shots of the juridical fact, from the same viewing angle and with different magnifications, to create at least two, preferably at least three, digital photographs to be certified.

6. Certification method according to any one of Claims 1 to 4, wherein the digital medium to be certified is video, step c) comprising the user taking a plurality of recordings of the juridical fact at different magnifications and potentially different viewing angles, to create at least one digital video to certify.

7. Certification method according to any one of Claims 1 to 6, wherein the geographical device coordinates stored in step d) are measured at the time of each shot/recording, then processed so as to obtain an average geographical position of a first shot/recording and of a final shot/recording, this average geographical position being stored in the file to be certified.

8. Certification method according to any one of Claims 1 to 7, wherein step g) comprises a preliminary sub-step g0) of selecting the trusted third party from a list of pre-registered trusted third parties, selection resulting from a selection rule comprising comparison of the geographical coordinates contained in the file to be certified with geographical coordinates representative of each pre-registered trusted third party, and selection of a trusted third party geographically closest to the geographical coordinates contained in the file to be certified.

9. Certification method according to any one of Claims 1 to 8, wherein step c) comprises automatically measuring the distance between the device for capturing digital media and the juridical fact, and generating a warning signal when the device is located at a predetermined distance from the juridical fact with a view to allowing at least two, preferably at least three, shots/recordings of the juridical fact to be taken by the user, at different magnifications.

10. Certification method according to any one of Claims 1 to 9, wherein step c) comprises requesting a first shot/recording at a first magnification, then requesting a second shot/recording at a second magnification different from the first, then, preferably, requesting a third shot/recording at a third magnification different from the first and the second, with a view to allowing at least two, preferably at least three, shots/recordings of the juridical fact to be taken by the user, at different magnifications.

11. Certification method according to any one of Claims 1 to 10, wherein step c) comprises capturing data on distances between the capturing device and the juridical fact, and step g) comprises sending the distance data and a command to make a three-dimensional reconstruction of the juridical fact to a 3D printer.

12. Certification method according to any one of Claims 1 to 11, wherein step e) comprises storing a time and date of receipt of the file to be certified by the storage server, and step g) comprises storing a time and date of connection of the trusted third party to the storage server, the certification method further comprising a step i) of computing the length of time between the time and date of receipt of the file to be certified by the storage server and the time and date of connection of the trusted third party to the storage server, of comparing the computed length of time and a predetermined length of time before reassignment, and of reassigning the file to be certified (106) to another trusted third party.

13. Certification method according to any one of Claims 1 to 12, wherein step e) comprises storing a time and date of receipt of the file to be certified by the storage server, the certification method further comprising a step j) of computing the time that has elapsed since the time and date of receipt of the file to be certified by the storage server, of comparing the time that has elapsed since the time and date of receipt of the file to be certified by the storage server and a predetermined length of time before reminding, and sending a reminder to the trusted third party when the time and date of receipt of the file to be certified by the storage server was longer ago than the predetermined length of time before reminding.

14. Certification system allowing a trusted third party to certify digital media representative of a juridical fact, comprising at least one remote server programmed to communicate via a telecommunications network with at least one device for capturing digital media of a user, the capturing device being equipped with a digital camera, with a native library for storing captured digital media that is accessible by the user, with a human-machine interface, and with a transceiver able to transmit the digital media to said remote server, **characterized in that**:
- the capturing device comprises a dedicated memory that is distinct from the native library, and that is inaccessible to the user, for processing and/or storing digital media to be certified; and **in that**
- the capturing device and the server are programmed to implement the method according to any one of Claims 1 to 13.

15. Certification system according to Claim 14, wherein the capturing device further comprises a distance sensor, the device being programmed to automatically measure a distance between the device for capturing digital media and the juridical fact, and to generate a warning signal when the device is located at a predetermined distance from the juridical fact with a view to allowing at least two, preferably at least three, shots/recordings of the juridical fact to be taken by the user, at different magnifications.

16. Certification system according to Claim 15, wherein the distance sensor is associated with an angular scanning system programmed to scan a defined region containing the juridical fact and to obtain one or more shots/recordings consisting of distance data, the capturing device being programmed to carry out three-dimensional mapping of the surface of said region based on the obtained distance data, and to generate a file to be certified containing said mapping by way of a digital medium to be certified, a time and date when the mapping was obtained, and geographical coordinates of the device at the time and date of the mapping.
